# EUROPEAN PATENT SPECIFICATION

(11) **EP 1 114 937 B1**
(45) Date of publication and mention of the grant of the patent: **21.06.2006**
(21) Application number: 00128503.0
(22) Date of filing: 27.12.2000
(51) Int. Cl.: F16C 1/26, F16B 9/02, F16B 21/04

(54) **A unit for restraining an elongate element, particularly the sheath of a flexible cable**
Vorrichtung zur Befestigung eines langgestreckten Körpers, insbesondere einer Bowdenzughülle, an einem Träger
Dispositif pour fixer un corps allongé, en particulier une gaine de câble flexible, à un support

(30) Priority: 29.12.1999 IT TO991169
(43) Date of publication of application: 11.07.2001
(73) Proprietor: SILA HOLDING INDUSTRIALE SPA, 10042 Nichelino (Torino) (IT)
(72) Inventor: Melis, Salvatore, 10093 Collegno (Torino) (IT)
(74) Representative: Fioravanti, Corrado

(56) References cited:
- EP-A- 0 365 243
- EP-A- 0 939 237
- DE-A- 3 937 636
- DE-A- 4 109 446
- DE-A- 19 528 953
- DE-U- 9 313 485
- US-A- 5 579 662
- US-A- 5 596 908
- US-A- 5 613 406
- US-A- 5 615 584

## Description

The present invention relates to a unit for restraining an elongate element, particularly the sheath of a flexible cable, the unit comprising an abutment body coaxial with the elongate element and having a pair of opposed shoulder surfaces which extend transverse the general axis of the elongate element and which define, on opposite sides, an engagement portion of the abutment body, the unit also comprising a support bracket having a main seat for housing the engagement portion of the abutment body.

In known restraining units of the type indicated above, one of the shoulder surfaces coincides with an end surface of a main portion of the abutment body and the other shoulder surface, opposite the first, is constituted by an end surface of a tightening bush mounted for sliding coaxially relative to the main portion of the abutment body. A thrust spring is associated with the main portion and with the bush so as to urge the latter towards the above-mentioned end surface of the abutment body. In this manner, when the abutment body is disposed in a seat, normally a U-shaped seat, formed in a support bracket, the mutually facing end surfaces of its main portion and of the bush thus come into abutment with the opposed faces of the bracket under the effect of the resilient force of the thrust spring, so that the abutment body is fixed in the seat in the bracket.

However, the fact that the abutment body comprises two sliding portions and a thrust spring makes it fairly complex to produce and to assemble and therefore leads to an increase in its production costs.

US-A-5 596 908 discloses a restraining unit as defined in the preamble of claim 1. Another similar restraining unit is known from US-A-5 579 662.

To solve the above problem, the invention provides a restraining unit as defined in claim 1.

By virtue of these characteristics, the unit according to the invention has a simple structure which, in particular, enables the abutment body to be formed as a single piece, advantageously reducing production costs. Moreover, the locking means are disposed in a position which is protected from external knocks and enable a reliable locking of the abutment body to the seat in the respective bracket to be achieved without the need for sliding parts of the abutment body.

Further advantages of the invention will become clearer from the following detailed description, provided purely by way of an example with reference to the appended drawings, in which:
Figure 1 is a schematic, perspective view of a restraining unit according to the invention, in the separate condition prior to assembly,

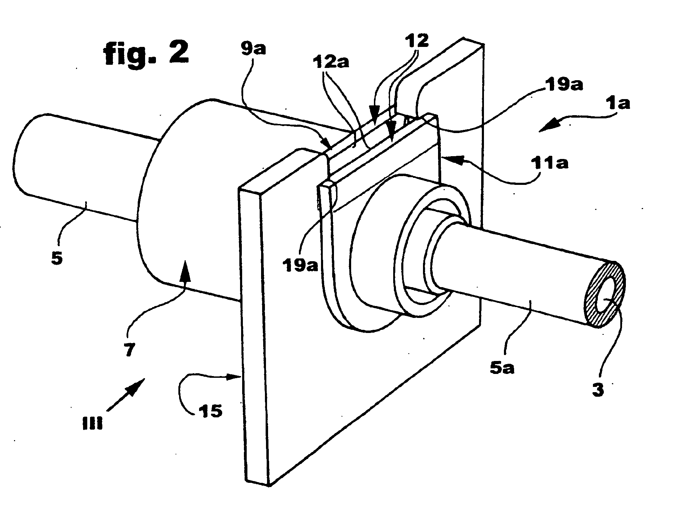

Figure 2 is a view similar to that of Figure 1, showing the unit in the assembled condition,

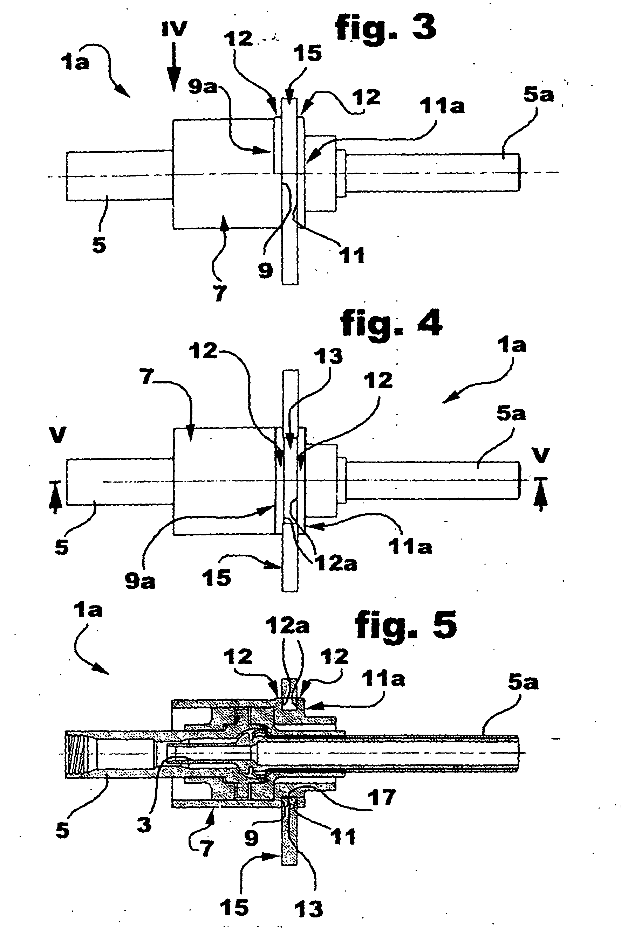

Figure 3 is a side elevational view of the unit from the side indicated by the arrow III of Figure 2,
Figure 4 is an elevational view of the unit from the top as indicated by the arrow IV of Figure 3, and
Figure 5 is a side elevational view sectioned on the line V-V of Figure 4.

with reference to the drawings, a unit for restraining an elongate element, for example, the sheath of a flexible cable, also known as a "push-pull" cable, is generally indicated 1a. In particular, the unit 1a comprises a generally cylindrical abutment body 7 having an axial through-cavity 3 along which a sliding core (not shown in the drawings) of the push-pull cable, is normally housed.

Two cylindrical tubular portions 5 and 5a of smaller diameter than the body 7 extend at the opposite ends of the body 7 and both are intended for guiding the sliding of the core of the push-pull cable, the portion 5 also being arranged for enabling the sheath (also not shown) of the cable to be fixed, in known manner, for example, by means of a male-and-female screw coupling.

The body 7 has a pair of flat shoulder surfaces 9 and 11 which face one another so as to be opposed and, advantageously, are formed integrally with the body. The surfaces 9 and 11 are defined, in particular, by the faces of a pair of generally U-shaped plates 9a and 11a, both extending transversely relative to the body 7 and disposed in positions close to the tubular portion 5a.

An annular engagement portion 13 of the abutment body 7 defined between the shoulder surfaces 9 and 11 can be engaged in an opening 17 in a bracket 15, for example, connected rigidly to a portion of the body of a motor-vehicle in order to provide a fixed reference for the position of a portion of a push-pull cable.

In particular, the bracket 15 has a U-shaped opening 17 shaped in a similar manner to the plates 9a and 11a, a pair of notches 19a being formed in mutually facing positions in the sides of the seat 17. The thickness of the bracket 15, at least in the region of the bracket 15 adjacent the edge of the opening 17, corresponds substantially to the axial distance between the surfaces 9 and 11.

Respective resilient appendages 12 formed on the abutment body 7 at the upper ends (with reference to the drawings) of the plates 9a and 11a, extend transverse the general axis of the body 7, spaced therefrom by a distance corresponding to the distance of the notches 19a from the same axis, when the body 7 is fitted in position in the seat 17, that is, when the engagement portion 13 is in abutment with the base of the U-shaped seat 17.

Both of the resilient appendages 12 have, in the vicinity of their free ends farthest from the general axis of the body 7, a pair of inclined surfaces 12a which project into the space between the surfaces 9 and 11 so as to define a space narrower than the axial width of the engagement portion 13.

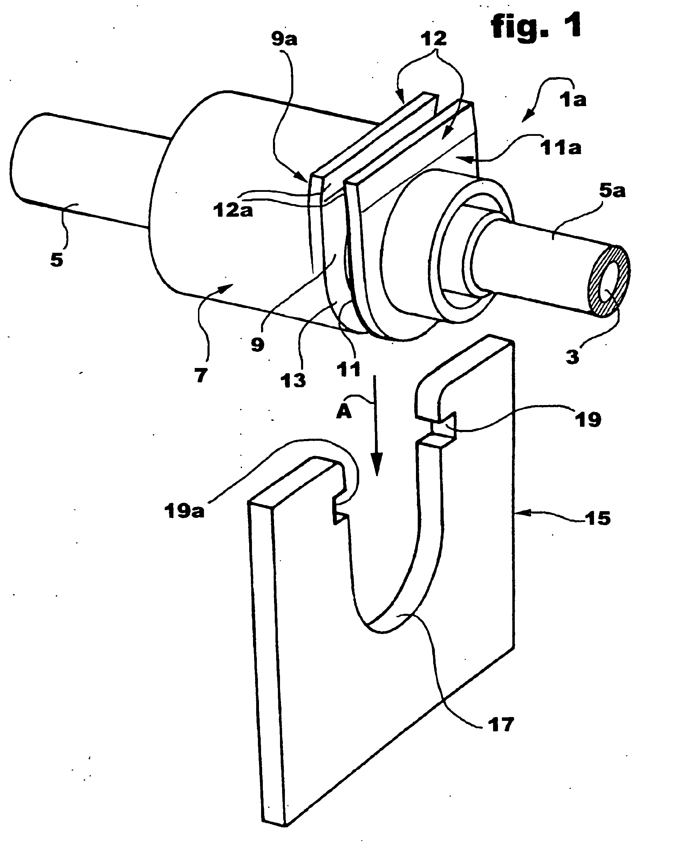

As a result of the radial insertion of the engagement portion 13 in the seat 17 of the bracket 15 in the direction indicated by the arrow A in Figure 1, the appendages 12 are deformed slightly away from one another so as to allow the edge of the opening 17 to pass between them. When the engagement portion 13 abuts the base of the seat 17, the opposite ends of the resilient appendages 12 are engaged in the notches 19a so that they can return to the undeformed condition in which the distance between the inclined surfaces 12a is less than the width of the portion 13 so that the surfaces abut respective upper surfaces of the notches 19a, preventing radial removal of the body 7 from the bracket 15.

In particular, when the restraining unit 1a is in the assembled condition, the shoulder surfaces 9 and 11 prevent axial movement of the body 7 and hence of the sheath of the push-pull cable fixed thereto and, by virtue of the engagement of the appendages 12 in the notches 19a, the body 7 is also fixed relative to the bracket 15 both radially and with regard to rotation.

## Claims

1. A unit for restraining an elongate element, particularly the sheath of a flexible cable, the unit comprising an abutment body (7) coaxial with the elongate element and having a pair of opposed shoulder surfaces (9, 11) which extend transverse the general axis of the elongate element and which define, on opposite sides, an engagement portion (13) of the abutment body (7), the unit also comprising a support bracket (15) having a main U-shaped seat (17) for housing the engagement portion (13) of the abutment body (7), the axial distance between the shoulder surfaces (9, 11) of the abutment body (7) being fixed and corresponding substantially to the thickness of the bracket (15), at least in the vicinity of its main seat (17), the bracket (15) having in the vicinity of the main seat (17), at least one auxiliary seat (19a; 19b) for engagement, as a result of a movement of the abutment body (7) relative to the bracket (15) in a plane substantially parallel to the bracket (15), by resilient snap locking means (12a; 12b) connected to the abutment body (7),
**characterized in that**
the at least one auxiliary seat comprises a notch (19a) in a side of the U-shaped seat (17), and **in that**
the snap locking means (12a; 12b) comprise at least one resilient appendage (12) spaced from the axis of the elongate body and having an inclined portion (12a) projecting axially from one (9) of the shoulder surfaces (9, 11) of the abutment body (7) towards the other shoulder surface (11) into the space between the two shoulder surfaces (9, 11)
whereby, as a result of the radial insertion of the engagement portion (13) of the abutment body (7) in the main seat (17) of the bracket (15), the end of the resilient appendage (12) snap engages the respective notch (19a), preventing radial removal of the abutment body (7) from the bracket (15).

2. A unit according to Claim 1, **characterized in that** the at least one auxiliary seat comprises a pair of notches (19a), formed in mutually facing positions, each on one of the sides of the main U-shaped seat (17), each of the notches (19a) being intended to be engaged by a respective end of the inclined portion (12a) of the resilient appendage (12).

3. A unit according to Claim 2, **characterized in that** each of the shoulder surfaces (9, 11) of the abutment body (7) has a resilient appendage (12) spaced from the axis of the elongate body and having an inclined portion (12a) which projects towards the other shoulder surface (9, 11), the resilient appendages (12) being parallel to one another and being disposed at the same distance from the general axis of the elongate body so that, as a result of the insertion of the abutment body (7) in the main seat (17) of the bracket (15), the ends of the pair of resilient appendages (12) engage the pair of notches (19a).

## Patentansprüche

1. Einheit zum Festhalten eines langgestreckten Elements, insbesondere der Hülle eines biegsamen Kabels, wobei die Einheit einen Widerlagerkörper (7) umfasst, der zum langgestreckten Element koaxial ist und ein Paar von gegenüberliegenden Schulterflächen (9, 11) aufweist, die sich quer zur Hauptachse des langgestreckten Elements erstrecken und an gegenüberliegenden Seiten einen Eingriffsteil (13) des Widerlagerkörpers (7) begrenzen, wobei die Einheit auch eine Halteklammer (15) mit einer U-förmigen Hauptaufnahme (17) zum Unterbringen des Eingriffsteils (13) des Widerlagerkörpers (7) umfasst und der axiale Abstand zwischen den Schulterflächen (9, 11) des Widerlagerkörpers (7) festgelegt ist und im Wesentlichen der Dicke der Klammer (15) entspricht, und zwar zumindest in der Nähe von deren Hauptaufnahme (17), wobei die Klammer (15) in der Nähe der Hauptaufnahme (17) zumindest eine zusätzliche Aufnahme (19a; 19b) für den Eingriff durch elastische, mit dem Widerlagerkörper (7) verbundene Schnappverschlussmittel (12a; 12b) infolge einer Bewegung des Widerlagerkörpers (7) relativ zur Klammer (15) auf einer Ebene, die zur Klammer (15) im Wesentlichen parallel ist, aufweist,
**dadurch gekennzeichnet, dass**
die zumindest eine zusätzliche Aufnahme eine Kerbe (19a) an einer Seite der U-förmigen Aufnahme (17) umfasst, und dass
die Schnappverschlussmittel (12a; 12b) zumindest einen elastischen Fortsatz (12) umfassen, der von der Achse des langgestreckten Körpers beabstandet ist und einen geneigten Abschnitt (12a) aufweist, welcher aus einer (9) der Schulterflächen (9, 11) des Widerlagerkörpers (7) hin zur anderen Schulterfläche (11) axial in den Raum zwischen den beiden Schulterflächen (9, 11) ragt,
wobei das Ende des elastischen Fortsatzes (12) infolge des radialen Einsetzens des Eingriffsteils (13) des Widerlagerkörpers (7) in der Hauptaufnahme (17) der Klammer (15) in der jeweiligen Kerbe (19a) einrastet, wodurch ein radiales Herausnehmen des Widerlagerkörpers (7) aus der Klammer (15) verhindert wird.

2. Einheit gemäß Anspruch 1, **dadurch gekennzeichnet, dass** die zumindest eine zusätzliche Aufnahme ein Paar von Kerben (19a) umfasst, die in einander gegenüberliegenden Positionen jeweils an einer der Seiten der U-förmigen Hauptaufnahme (17) gebildet sind, wobei jede der Kerben (19a) dafür bestimmt ist, durch ein jeweiliges Ende des geneigten Abschnitts (12a) des elastischen Fortsatzes (12) in Eingriff genommen zu werden.

3. Einheit gemäß Anspruch 2, **dadurch gekennzeichnet, dass** jede der Schulterflächen (9, 11) des Widerlagerkörpers (7) einen elastischen Fortsatz (12) aufweist, der von der Achse des langgestreckten Körpers beabstandet ist und einen geneigten Abschnitt (12a) aufweist, welcher zur anderen Schulterfläche (9, 11) ragt, wobei die elastischen Fortsätze (12) zueinander parallel und im selben Abstand von der Hauptachse des langgestreckten Körpers angeordnet sind, so dass die Enden des Paars von elastischen Fortsätzen (12) infolge des Einsetzens des Widerlagerkörpers (7) in der Hauptaufnahme (17) der Klammer (15) in das Paar von Kerben (19a) eingreifen.

## Revendications

1. Module pour retenir un corps allongé, en particulier la gaine d'un câble flexible, le dispositif comprenant un corps de butée (7) coaxial avec le corps allongé et ayant une paire de surfaces d'épaulement opposées (9, 11) qui s'étendent transversalement à l'axe général du corps allongé et qui définissent, sur des côtés opposés, une partie de prise (13) du corps de butée (7), le module comprenant également une patte support (15) ayant un siège principal (17) en forme de U pour loger la partie de prise (13) du corps de butée (7), la distance axiale entre les surfaces d'épaulement (9, 11) du corps de butée (7) étant fixe et correspondant sensiblement à l'épaisseur de la patte (15), au moins au voisinage de son siège principal (17), la patte (15) ayant au voisinage du siège principal (17) au moins un siège auxiliaire (19a, 19b) destiné à une prise, par suite d'un mouvement du corps de butée (7) par rapport à la patte (15) dans un plan sensiblement parallèle à la patte (15), par des moyens d'encliquetage élastiques (12a ; 12b) reliés au corps de butée (7),
**caractérisé en ce que**
le siège auxiliaire au nombre d'au moins un comprend une encoche (19a) dans un côté du siège en forme de U (17), et **en ce que**
les moyens d'encliquetage (12a ; 12b) comprennent au moins un appendice élastique (12) espacé de l'axe du corps allongé et ayant une partie inclinée (12a) formant saillie axialement depuis l'une (9) des surfaces d'épaulement (9, 11) du corps de butée (7) en direction de l'autre surface d'épaulement (11) à l'intérieur de l'espace situé entre les deux surfaces d'épaulement (9, 11),
de sorte que, par suite de l'insertion radiale de la partie de prise (13) du corps de butée (7) dans le siège principal (17) de la patte (15), l'extrémité de l'appendice élastique (12) enclenche l'encoche respective (19a), empêchant un retrait radial du corps de butée (7) depuis la patte (15).

2. Module selon la revendication 1, **caractérisé en ce que** le siège auxiliaire au nombre d'au moins un comprend une paire d'encoches (19a) formées en des positions en vis-à-vis, chacune sur l'un des côtés du siège principal (17) en forme de U, chacune des encoches (19a) étant destinée à être mise en prise par une extrémité respective de la partie inclinée (12a) de l'appendice élastique (12).

3. Module selon la revendication 2, **caractérisé en ce que** chacune des surfaces d'épaulement (9, 11) du corps de butée (7) possède un appendice élastique (12) espacé de l'axe du corps allongé et ayant une partie inclinée (12a) qui dépasse en direction de l'autre surface d'épaulement (9, 11), les appendices élastiques (12) étant mutuellement parallèles et étant placés à la même distance de l'axe général du corps allongé, de sorte qu'en conséquence de l'insertion du corps de butée (7) dans le siège principal (17) de la patte (15), les extrémités de la paire d'appendices élastiques (12) se mettent en prise dans la paire d'encoches (19a).
